(19) Europäisches Patentamt / European Patent Office / Office européen des brevets

(11) **EP 2 734 859 B1**

(12) **EUROPÄISCHE PATENTSCHRIFT**

(45) Veröffentlichungstag und Bekanntmachung des Hinweises auf die Patenterteilung:
**11.07.2018 Patentblatt 2018/28**

(51) Int Cl.:
**G01S 7/52** *(2006.01)*     **G01S 15/93** *(2006.01)*

(21) Anmeldenummer: **12729371.0**

(22) Anmeldetag: **22.05.2012**

(86) Internationale Anmeldenummer:
**PCT/EP2012/059450**

(87) Internationale Veröffentlichungsnummer:
**WO 2013/010696 (24.01.2013 Gazette 2013/04)**

(54) **VERFAHREN UND VORRICHTUNG ZUR ANPASSUNG DER EMPFINDLICHKEIT MINDESTENS EINES ULTRASCHALLSENSORS IM LAUFENDEN BETRIEB**

METHOD AND APPARATUS FOR ADAPTING THE SENSITIVITY OF AT LEAST ONE ULTRASONIC SENSOR DURING ONGOING OPERATION

PROCÉDÉ ET DISPOSITIF D'ADAPTATION DE LA SENSIBILITÉ D'AU MOINS UN CAPTEUR D'ULTRASONS EN SERVICE PERMANENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.07.2011 DE 102011079303**

(43) Veröffentlichungstag der Anmeldung:
**28.05.2014 Patentblatt 2014/22**

(73) Patentinhaber: **Robert Bosch GmbH 70442 Stuttgart (DE)**

(72) Erfinder:
- **KLOTZ, Albrecht 71229 Leonberg (DE)**
- **RAPPS, Peter 76227 Karlsruhe (DE)**

(56) Entgegenhaltungen:
**WO-A1-2004/104623     WO-A1-2007/051665 US-A- 3 789 352**

**Beschreibung**

Stand der Technik

Die vorliegende Erfindung betrifft ein Verfahren und eine Vorrichtung zur Anpassung der Empfindlichkeit mindestens eines Ultraschallsensors im laufenden Betrieb. Auch betrifft die Erfindung ein Fahrzeugassistenzsystem mit einer Vorrichtung zur Durchführung des erfindungsgemäßen Verfahrens.

Fahrerassistenzfunktionen basierend auf Ultraschallsensoren sind schon seit mehr als 15 Jahren auf dem Markt. Die klassische Einparkhilfe wird zunehmend mit komplexeren Funktionen wie z.B. Ausparkunterstützung, semi-autonomes Einparken und Seitenansichtassistenz (Side-View-Assist) ergänzt. Außerdem sind Funktionen in Entwicklung oder auf dem Markt, die je nach Ausprägungsform, als sicherheitsrelevant im Sinne der ISO-Norm ISO26262 eingestuft werden (ASIL ≥ A).

Zur Realisierung dieser Premium- und sicherheitsrelevanten Funktionen müssen die Ultraschallsensoren immer näher an ihren Leistungsgrenzen betrieben werden. Leistungseinbußen aufgrund von ungünstigen Umgebungsbedingungen oder Alterungseffekten führen zu Funktionseinschränkungen, die oft nicht detektiert werden können. Außerdem gewinnt eine umfassendere und gezieltere Eigendiagnose der Sensoren für diese anspruchsvolleren Funktionen eine zunehmende Bedeutung.

Heute in Fahrerassistenzsystemen eingesetzte Ultraschallsensoren weisen typischerweise durch fertigungsbedingte Streuungen in den Toleranzen von Bauelementen, unterschiedliche Temperaturgänge oder Alterungseffekte oder weitere Einflussfaktoren ultraschallsensor-individuelle Empfindlichkeitsunterschiede auf, die nicht zu vermeiden sind.

Manche Ultraschallsensor-Fahrerassistenzfunktionen wie z.B. "Side View Assist (SVA)" setzen allerdings Sensoren mit vergleichbarer Empfindlichkeit voraus. Das gleiche gilt in abgeschwächtem Maße für Parkpilotsysteme, bei denen die Sensoren auch Kreuzechoinformationen benötigen und deswegen eine hinreichend ähnliche Sensorempfindlichkeit haben müssen. Übersteigen die Empfindlichkeitsunterscheide ein gewisses Maß, treten z.T. erhebliche Einbußen in der Leistungsfähigkeit der Funktion ein.

Aus dem Stand der Technik sind Verfahren bekannt, mit denen die elektrischen Ersatzparameter des Ultraschallsensors im laufenden Betrieb ermittelt werden können.

Aus dem Dokument WO 2007/051665 A1 ist eine Kalibrierung eines Ultraschallsensors bekannt, wobei ein Ultraschallsignal von einem ersten Ultraschallsensor ohne Reflektion an einem Umgebungsobjekt zu einem zweiten Ultraschallsensor übertragen wird und die Amplitude des von dem zweiten Ultraschallsensor empfangenen und als Übersprechsignal bezeichneten Ultraschallsignals mit einem gespeicherten Wert verglichen wird, wonach die Empfindlichkeit erhöht bzw. gesenkt wird, wenn die Amplitude des von dem zweiten Sensor empfangenen Übersprechsignals den ersten Wert unterschreitet bzw. überschreitet. Um eine beträchtliche Funktionsstörung des zweiten Sensors ausschließen zu können, wird die Amplitude des empfangenen Übersprechsignals auch mit einem zweiten gespeicherten, gegenüber dem ersten Wert niedrigeren Wert verglichen. Dabei wird eine Fehlermeldung ausgegeben, wenn die Amplitude des empfangenen Übersprechsignals den zweiten gespeicherten Wert unterschreitet. Nachteilig dabei ist, dass die Bestimmung der Empfindlichkeit des zweiten Sensors durch empfangene und vorher an Umgebungsobjekten reflektierte Ultraschallwellen stark verfälscht bzw. beeinträchtigt werden kann.

Aus dem Dokument DE 10 2006 053 112 A1 ist ein Verfahren zum Regeln eines Sendeschalldrucks und einer einstellbaren Empfangsverstärkung eines Ultraschallsensors bekannt, bei dem der Wandler mit einem einstellbaren Sendestrom angeregt und ein indirektes Messen des Sendeschalldrucks des Sensors mittels einer Messeinrichtung durchgeführt wird. Der Sendeschalldruck und die Empfangsverstärkung des Sensors werden durch nichtlineares progressives Regeln mittels eines Nachführens des einstellbaren Sendestroms und der einstellbaren Empfangsverstärkung anhand des Resultats des indirekten Messens des Sendeschalldrucks geregelt. Aus dem gleichen Dokument ist es bekannt, dass sich der Dämpfungswiderstand Rs in dem Ersatzschaltbild des Ultraschallwandlers verändern kann und dass der Sendeschalldruck indirekt durch das Messen der Anregungsspannung bestimmt wird. Nachteilig dabei ist, dass das Nachführens des einstellbaren Sendestroms und der einstellbaren Empfangsverstärkung bei der Regelung des Sendeschalldrucks und der Empfangsverstärkung mittels eines indirekten und dadurch auch für Messfehler verstärkt anfälligen Messens des Sendeschalldrucks erfolgt.

Ferner ist aus dem Dokument WO 2007/051665 A1 ein Verfahren zur Kalibrierung eines Ultraschallsensors bekannt, bei dem eine Empfindlichkeit eines zweiten. Ultraschallsensors in Abhängigkeit eines Vergleichs der Stärke eines von einem ersten Ultraschallsensor ausgesandten Signals mit einem gespeicherten Wert eingestellt wird. Aus dem Dokument US 3 789 352 A, in dem ein Verfahren zum Testen einer Echolot-Vorrichtung beschrieben wird, ist bekannt, dass ein Abklingen einer aus einer aufgeprägten Deltafunktion resultierenden oszillierenden Welle vom Gütefaktor eines Verstärkers abhängt.

Aus dem Dokument WO 2004/104623 A1 ist ein Verfahren zur Einparkhilfe durch Ultraschall-Umgebungserfassung bekannt, bei dem eine adaptive Anpassung einer Empfängercharakteristik durchgeführt wird.

Offenbarung der Erfindung

Es wird ein Verfahren und eine Vorrichtung gemäß den beigefügten unabhängigen Ansprüchen bereitgestellt.

Bei dem erfindungsgemäßen Verfahren zur Anpassung der Empfindlichkeit von Ultraschallsensoren im laufenden Betrieb wird die Empfindlichkeit mindestens eines ersten Ultraschallsensors zu mindestens einem vordefinierten Zeitpunkt während des laufenden Betriebes mittels eines ersten Parameters, der von einem zum Zeitpunkt der Fertigung gültigen Gütefaktor des Ultraschallsensors und einem zu dem vordefinierten Zeitpunkt ermittelten Gütefaktor des Ultraschallsensors abhängig ist, geschätzt und als Steuergröße zur Anpassung der Empfindlichkeit des ersten und/oder mindestens eines zweien Ultraschallsensors herangezogen.

Ferner wird erfindungsgemäß eine Vorrichtung zur Durchführung des erfindungsgemäßen Verfahrens bereitgestellt, die eine Steuervorrichtung umfasst, die dazu ausgebildet ist, ein erster Parameter, der von einem zum Zeitpunkt der Fertigung gültiger Gütefaktor und von einem zu mindestens einem vordefinierten Zeitpunkt gültigen Gütefaktor mindestens eines ersten Ultraschallsensors abhängig ist, zu ermitteln, die Empfindlichkeit des ersten Ultraschallsensors zu dem mindestens einen vordefinierten Zeitpunkt anhand des ersten Parameters zu schätzen und als Steuergröße zur Anpassung der Empfindlichkeit des ersten Ultraschallsensors und/oder mindestens eines zweiten Ultraschallsensors heranzuziehen.

Die Unteransprüche zeigen bevorzugte Weiterbildungen der Erfindung.

Durch das erfindungsgemäße Verfahren insbesondere zur Eigendiagnose mindestens eines Ultraschallsensors wird die momentane sensorindividuelle Empfindlichkeit mittels einer zuverlässigen, einfachen und dadurch auch rechenarmen Methode geschätzt. Der erste Parameter mindestens eines Ultraschallsensors kann insbesondere aus dem Quotienten der Gütefaktoren des entsprechenden Ultraschallsensors berechnet werden.

Insbesondere werden bei dem erfindungsgemäßen Verfahren die Ersatzparameter mindestens eines Ultraschallsensors zum Zeitpunkt der Fertigung vorzugsweise in dem entsprechenden Ultraschallsensor gespeichert und von einer Steuervorrichtung (Steuergerät) gelesen und die Ersatzparameter mindestens eines Ultraschallsensors im laufenden Betrieb bestimmt und an die Steuervorrichtung übertragen.

Vorteilhafterweise wird bei dem erfindungsgemäßen Verfahren der zum Zeitpunkt der Fertigung gültige und/oder der zu der vordefinierten Zeit gültige Gütefaktor und/oder der erste Parameter mindestens eines Ultraschallsensors in einfacher Weise aus seinen Ersatzparametern bestimmt.

Insbesondere wird bei dem erfindungsgemäßen Verfahren zur Plausibilisierung der geschätzten Empfindlichkeit mindestens eines Ultraschallsensors mindestens ein von dem ersten Parameter unabhängiger zweiter Parameter herangezogen. Zur Plausibilisierung der geschätzten Empfindlichkeit mindestens eines Ultraschallsensors können weitere direkt beziehungsweise indirekt abgeleitete Signale, wie z.B. das Temperatursignal, die Empfindlichkeitsveränderung anderer Ultraschallsensoren im Fahrzeug, eine sensoreigene Rauschschätzung und/oder Blindheitserkennung usw., vor der Auslösung einer Fehlermeldung und/oder einer Systemreaktion zusätzlich verwendet werden.

Bei dem erfindungsgemäßen Verfahren wird insbesondere beim Vorliegen einer von einem vorbestimmten Schwellenwert abweichenden Empfindlichkeit mindestens eines Ultraschallsensors die Empfindlichkeit mindestens eines Ultraschallsensors geeignet angepasst und/oder eine Fehlermeldung erzeugt und/oder zumindest eine insbesondere von dem Zustand mindestens eines Ultraschallsensors abhängige Funktion deaktiviert.

Beim erfindungsgemäßen Verfahren wird die Empfindlichkeit des ersten Ultraschallsensors und/oder des mindestens einen zweiten Ultraschallsensors bevorzugt über eine geeignete Veränderung des jeweiligen Sendestroms und/oder der jeweiligen Empfangsverstärkung angepasst.

Durch die Erfindung können Empfindlichkeitsunterschiede einzelner Sensoren über die Zeit als auch Empfindlichkeitsunterschiede zwischen den im Fahrzeug gemeinsam verbauten Sensoren in einfacher Weise diagnostiziert werden. Sind die geschätzten Empfindlichkeitsunterschiede außerhalb von Spezifikationsgrenzen, kann entweder eine entsprechende Information an den Fahrer geliefert werden, ein Systemfehler generiert werden, der in der Werkstatt z.B. durch Sensortausch behoben werden muss, oder aber die Sensorempfindlichkeit mindestens eines Sensors durch elektronische Maßnahmen dynamisch angepasst werden.

Dabei kann eine Deaktivierung von verschiedene Funktionen mit Fahrerinformation erfolgen, dass das System aufgrund von eingeschränkter oder unterschiedlicher Empfindlichkeit einzelner und/oder bestimmter Sensoren und/oder Sensorpaaren temporär nicht zur Verfügung steht.

Auch kann eine Fahrerinformation wie z.B. ein Servicehinweis für den Fall erzeugt werden, dass die minimale Empfindlichkeit mindestens eines Ultraschallsensors unterschritten wird

Dadurch kann entweder adäquat auf Funktionseinschränkungen im System reagiert werden oder die Funktionseinschränkungen werden vermieden bzw. reduziert.

Ein weiterer Vorteil der Erfindung ist eine Aufweitung bzw. eine nicht übermäßige Einengung der maximal erlaubten Empfindlichkeitsstreuung für die Ausbeute in der Sensorfertigung.

Vorteilhafterweise wird bei dem erfindungsgemäßen Verfahren beim Vorliegen einer von einem vorbestimmten Schwellenwert abweichenden Empfindlichkeit mindestens eines Ultraschallsensors der Sendestrom und/oder die Empfangsverstärkung mindestens eines Ultraschalsensors zur dynamischen Anpassung seiner Empfindlichkeit geeignet verändert.

Insbesondere erfolgt die Änderung des Sendestroms und/oder der Empfangsverstärkung mindestens eines Ultraschalsensors durch die Verwendung der vorzugsweise in mindestens einem Ultraschallsensor selber gespeicherten und vorzugsweise an die Steuervorrichtung übertragenen Sendestrom-Empfindlichkeits-Kennlinie und/oder Empfangsverstärkungs-Empfindlichkeits-Kennlinie des Ultraschallsensors.

Erfindungsgemäß wird ein Fahrzeug mit einem eine erfindungsgemäße Vorrichtung umfassenden Fahrzeugassistenzsystem bereitgestellt. Durch die Verwendung eines erfindungsgemäßen Fahrzeugassistenzsystem wird insbesondere gewährleistet, dass die von einem solchen Fahrzeugassistenzsystem ermittelte Kollisionsgefahr des Fahrzeuges mit mindestens einem Fahrzeugumgebungshindernis zuverlässig ermittelt werden kann.

Die Vorteile der erfindungsgemäßen Vorrichtung, des erfindungsgemäßen Fahrzeugassistenzsystems und des erfindungsgemäßen Fahrzeuges entsprechen im Wesentlichen den Vorteilen des entsprechenden erfindungsgemäßen Verfahrens. Aus diesem Grund wird auf eine Widerholung verzichtet.

Zeichnung

Nachfolgend werden Ausführungsbeispiele der Erfindung unter Bezugnahme auf die begleitende Zeichnung im Detail beschrieben. In der Zeichnung ist:

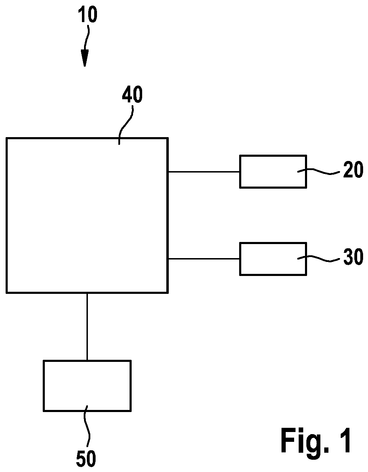

Figur 1    ein Blockschaltbild einer Vorrichtung zur Durchführung des erfindungsgemäßen Verfahrens nach einer ersten Ausführungsform der Erfindung.

Ausführungsform der Erfindung

In der Figur 1 ist eine Vorrichtung 10 zur Durchführung des erfindungsgemäßen Verfahrens nach einer ersten Ausführungsform der Erfindung dargestellt. Die Vorrichtung 10 umfasst insbesondere zwei Ultraschallsensoren 20, 30 und eine Steuervorrichtung (Steuergerät) 40, die dazu ausgebildet ist, die aktuelle Empfindlichkeit eines Ultraschallsensors 20, 30 anhand eines ersten Parameters zu schätzen und als Steuergröße zur Anpassung der Empfindlichkeit mindestens eines Ultraschallsensors 20, 30 heranzuziehen. Der erste Parameter für ein Ultraschallsensor 20, 30 wird insbesondere aus dem Quotienten Q_ratio zwischen einem zum Zeitpunkt der Fertigung gültiger Gütefaktor Q0 des Ultraschallsensors 20, 30 und einem aktuellen Gütefaktor Q_akt desselben Ultraschallsensors 20, 30 berechnet. Denkbar ist auch die Verwendung einer anderen äquivalenten Abhängigkeit des ersten Parameters von den Gütefaktoren.

Bei der Erfindung können die Ersatzparameter (EP) jedes Einzelsensors 20, 30 zum Zeitpunkt der Fertigung im Sensor abgespeichert werden und nach Integration der Sensoren im Fahrzeug vom Steuergerät 40 ausgelesen werden. Insbesondere können weiter die Ersatzparameter jedes einzelnen Sensors 20, 30 im laufenden Betrieb ermittelt werden. Vorzugsweise ist die (kalibrierte) Abhängigkeit zwischen Sendestrom und Empfindlichkeit und/oder zwischen Empfangsverstärkung und Empfindlichkeit für mindestens einen Sensor 20, 30 in der insbesondere von dem Steuergerät 40 umfasste Funktionssoftware bekannt.

Die Gütefaktoren und der erste Parameter werden pro Sensor 20, 30 insbesondere aus den Ersatzparametern des einzelnen Sensors 20, 30 bestimmt:

Q0 der zum Zeitpunkt der Fertigung gültige Gütefaktor

$$Q0 = sqrt(Ls0/Cs0) / Rs0,$$

der modifizierte Gütefaktor

$$Q\_akt = f(Cr, Cr0)*sqrt(Ls\_akt/Cs\_akt) / Rs\_akt$$

sowie

der erste von den Gütefaktoren abhängigen Parameter

$$Qratio = Qakt / Q0.$$

Dabei sind Ls, Rs, Cs, Cr die Wandlerparameter des elektrischen Ersatzschaltbildes jedes Sensors 20, 30. Der Index "0" steht dabei für die Ersatzparameter (EP) zum Zeitpunkt der Fertigung und der Index "akt" repräsentiert die Ersatzparameter zum aktuellen Zeitpunkt. In dem Ausdruck des modifizierten Gütefaktors wird der Gütefaktor mit einer von dem Ersatzparameter Cr abhängigen Funktion f(Cr_akt, Cr0) multipliziert.

Die Größe Q_ratio wird als Maß für die Empfindlichkeitsdrift herangezogen und dient als Steuergröße. Für abnehmende Empfindlichkeit gilt Q_ratio <1.

Bei der Erfindung wird die Empfindlichkeit der einzelnen Sensoren dynamisch angepasst, insbesondere wie im Folgenden erläutert:

(i) Sinkt Q_ratio unter den Schwellwert Q_ratio_limit kann die Sensorempfindlichkeit eines Sensors 20, 30 angepasst werden, indem insbesondere der Sendestrom desselben Sensors 20, 30 erhöht wird. Im System müssen dafür die Voraussetzungen geschaffen werden, z.B. das Vorhandensein von Ultraschallsensoren 20, 30 mit parametrierbarem Strom und/oder einer geeignete Auslegung des Gesamtstrombudgets des Steuergeräts 40 für die Stromerhöhung und/oder das Vorhandensein einer im Steuergerät 40 abgelegten Sendestrom-Empfindlichkeits-Kennlinie des Ultraschallsensors 20.

(ii) Wenn das Gesamtstrombudget begrenzt bzw. bereits ausgeschöpft ist, kann alternativ der Sendestrom (und damit die Empfindlichkeit) eines anderen Sensors 30, 20 abgesenkt werden. Dies ist dann vorteilhaft, wenn eine Funktion wie z.B. die Seitenansichtassistenzfunktion vergleichbare Sensorempfindlichkeiten der vorhandenen Sensoren 20, 30 voraussetzt.

(iii) Die Sensorempfindlichkeit kann auch angepasst werden, indem die Empfangsverstärkung mindestens eines Sensors 20, 30 erhöht wird. Dies ist insbesondere dann vorteilhaft, wenn benachbarte Sensoren 20, 30 unterschiedliches Driftverhalten zeigen und Kreuzechoinformationen austauschen. In diesem Fall kann die Kreuzechoempfindlichkeit dynamisch angepasst werden

Eine Kombination des Schrittes (i) bzw. des Schrittes (ii) mit dem Schritt (iii) und weitere Kombinationen sind ebenfalls denkbar.

Die dynamische Anpassung der Sensorempfindlichkeit kann neben dem Q_ratio - Kriterium auch andere zur Verfügung stehende Informationen wie z.B. die Umgebungstemperatur, das im Ultraschallsensor ermittelte Rauschniveau heranziehen oder das Q_ratio - Niveau anderer im Fahrzeug verbauter Sensoren 30, 20 zur Plausibilisierung heranziehen.

Alternativ oder zusätzlich zur Anpassung der Sensorempfindlichkeit kann auch die Information über die Empfindlichkeitsveränderung eines Sensors 20, 30 dazu verwendet werden, eine Funktion zu deaktivieren und dem Fahrer die Nichtverfügbarkeit mittels einer Anzeigevorrichtung 50 anzuzeigen. Zusätzlich kann ein entsprechender Fehlerspeichereintrag generiert werden. Dies kann insbesondere für sicherheitskritische Anwendungen oder für Funktionen mit hohen Anforderungen an die Stabilität der Sensorempfindlichkeit gewinnbringend sein.

Neben der voranstehenden schriftlichen Offenbarung wird hiermit zur weiteren Offenbarung der Erfindung ergänzend auf die Darstellung in der Figur 1 Bezug genommen.

**Patentansprüche**

1. Verfahren zur Anpassung der Empfindlichkeit von Ultraschallsensoren (20, 30), bei dem die Empfindlichkeit mindestens eines ersten Ultraschallsensors (20, 30) zu zumindest einem vordefinierten Zeitpunkt während des laufenden Betriebes mittels eines ersten Parameters (Q_ratio) geschätzt wird, **dadurch gekennzeichnet dass** der erste Parameter (Q_ratio) von einem zum Zeitpunkt der Fertigung gültigen Gütefaktor (Q0) und von dem zu dem vordefinierten Zeitpunkt ermittelten Gütefaktor (Q_akt) des ersten Ultraschallsensors (20, 30) abhängig ist, und dass die geschätzte Empfindlichkeit des ersten Ultraschallsensors (20, 30) als Steuergröße zur Anpassung der Empfindlichkeit des ersten Ultraschallsensors (20, 30) und/oder mindestens eines zweiten Ultraschallsensors (20, 30) herangezogen wird.

2. Verfahren nach Anspruch 1, **dadurch gekennzeichnet, dass** der zum Zeitpunkt der Fertigung gültige Gütefaktor (Q0) und/oder der zu dem vordefinierten Zeitpunkt gültige Gütefaktor (Q_akt) und/oder der erste Parameter (Q_ratio) aus den elektrischen Ersatzparametern (Ls, Rs, Cs, Cr) des entsprechenden Ultraschallsensors (20, 30) bestimmt wird.

3. Verfahren nach Anspruch 1 oder 2, **dadurch gekennzeichnet, dass** zur Plausibilisierung der geschätzten Empfindlichkeit ein von dem ersten Parameter (Q_ratio) verschiedener zweiten Parameter herangezogen wird.

4. Verfahren nach einem der Ansprüche 1 bis 3, **dadurch gekennzeichnet, dass** wenn die Empfindlichkeit mindestens eines ersten Ultraschallsensors (20, 30) von einem vorbestimmten Schwellenwert abweicht die Empfindlichkeit des ersten Ultraschallsensors (20, 30) und /oder mindestens eines zweiten Ultraschallsensors (20, 30) geeignet angepasst wird und/oder eine Fehlermeldung erzeugt wird und/oder zumindest eine insbesondere von dem Zustand mindestens eines Ultraschallsensors (20, 30) abhängigen Funktion deaktiviert wird.

5. Vorrichtung (10) zur Durchführung eines Verfahrens nach einem der vorangehenden Ansprüche, **gekennzeichnet durch** eine Steuervorrichtung (40), die dazu ausgebildet ist, einen ersten Parameter (Q_ratio), der von einem zum Zeitpunkt der Fertigung gültiger Gütefaktor (Q0) und von einem zu zumindest einem vordefinierten Zeitpunkt gültigen Gütefaktor (Q_akt) mindestens eines ersten Ultraschallsensors (20, 30) abhängig ist, zu bestimmen, die Empfindlichkeit des ersten Ultraschallsensors (20, 30) zu dem vordefinierten Zeitpunkt anhand des ersten Parameters (Q_ratio) zu schätzen und als Steuergröße zur Anpassung der Empfindlichkeit des ersten Ultraschallsensors (20, 30) und/oder mindestens eines zweiten Ultraschallsensors (20,30) heranzuziehen.

6. Vorrichtung (10) nach Anspruch 5, **dadurch gekennzeichnet, dass** die Steuervorrichtung (40) dazu ausgebildet ist, den zum Zeitpunkt der Fertigung gültigen Gütefaktor (Q0) und/oder den zu dem vordefinierten Zeitpunkt gültigen Gütefaktor (Q_akt) und/oder den ersten Parameter (Q_ratio) aus den elektrischen Ersatzparametern (Ls, Rs, Cs, Cr) des entsprechenden Ultraschallsensors (20, 30) zu bestimmen.

7. Vorrichtung (10) nach einem der Ansprüche 5 oder 6, **dadurch gekennzeichnet, dass** die Steuervorrichtung (40) dazu ausgebildet ist, die geschätzte Empfindlichkeit mittels mindestens eines zweiten von dem ersten Parameter (Q_ratio) verschiedenen Parameters zu plausibilisieren.

8. Vorrichtung (10) nach einem der Ansprüche 5 bis 7, **dadurch gekennzeichnet, dass** die Steuervorrichtung (40) dazu ausgebildet ist, beim Vorliegen einer von einem vorbestimmten Schwellenwert abweichenden Empfindlichkeit mindestens eines ersten Ultraschallsensors (20, 30) die Empfindlichkeit des ersten Ultraschallsensors (20, 30) und/oder mindestens eines zweiten Ultraschallsensors (20, 30) geeignet anzupassen und/oder eine Fehlermeldung zu erzeugen und/oder zumindest eine insbesondere von dem Zustand mindestens eines Ultraschallsensors (20, 30) abhängigen Funktion zu deaktivieren.

9. Fahrzeugassistenzsystem mit einer Vorrichtung (10) nach mindestens einem der Ansprüche 6 bis 11.

**Claims**

1. Method for adapting the sensitivity of ultrasonic sensors (20, 30), in which the sensitivity of at least one first ultrasonic sensor (20, 30) at at least one predefined time during ongoing operation is estimated by means of a first parameter (Q_ratio), **characterized in that** the first parameter (Q_ratio) depends on a quality factor (Q0) that is valid at the time of manufacture and on the quality factor (Q_act) of the first ultrasonic sensor (20, 30) determined at the predefined time, and **in that** the estimated sensitivity of the first ultrasonic sensor (20, 30) is used as a control variable for adapting the sensitivity of the first ultrasonic sensor (20, 30) and/or at least one second ultrasonic sensor (20, 30).

2. Method according to Claim 1, **characterized in that** the quality factor (Q0) that is valid at the time of manufacture and/or the quality factor (Q_act) that is valid at the predefined time and/or the first parameter (Q_ratio) is determined from the electrical equivalent parameters (Ls, Rs, Cs, Cr) of the corresponding ultrasonic sensor (20, 30).

3. Method according to Claim 1 or 2, **characterized in that** a second parameter that is different from the first parameter (Q_ratio) is used to check the plausibility of the estimated sensitivity.

4. Method according to one of Claims 1 to 3, **characterized in that** if the sensitivity of at least one first ultrasonic sensor (20, 30) deviates from a predetermined threshold value, the sensitivity of the first ultrasonic sensor (20, 30) and/or at least one second ultrasonic sensor (20, 30) is adapted suitably and/or an error message is generated and/or at least one function that depends on the condition of at least one ultrasonic sensor (20, 30) is deactivated.

5. Device (10) for carrying out a method according to one of the preceding claims, **characterized by** a control device (40), which is designed to determine a first parameter (Q_ratio) of at least one ultrasonic sensor (20, 30), which depends on a quality factor (Q0) that is valid at the time of manufacture and on a quality factor (Q_act) that is valid at at least one predefined time, to estimate the sensitivity of the first ultrasonic sensor (20, 30) at the predefined time by using the first parameter (Q_ratio) and to use the same as a control variable for adapting the sensitivity of the first ultrasonic sensor (20, 30) and/or at least one second ultrasonic sensor (20, 30).

**6.** Device (10) according to Claim 5, **characterized in that** the control device (40) is designed to determine the quality factor (Q0) that is valid at the time of manufacture and/or the quality factor (Q_act) that is valid at the predefined time and/or the first parameter (Q_ratio) from the electric equivalent parameters (Ls, Rs, Cs, Cr) of the corresponding ultrasonic sensor (20, 30).

**7.** Device (10) according to either of Claims 5 and 6, **characterized in that** the control device (40) is designed to check the plausibility of the estimated sensitivity by means of at least one second parameter that is different from the first parameter (Q_ratio).

**8.** Device (10) according to one of Claims 5 to 7, **characterized in that** in the presence of a sensitivity of at least one first ultrasonic sensor (20, 30) that differs from a predefined threshold value, the control device (40) is designed to adapt the sensitivity of the first ultrasonic sensor (20, 30) and/or at least one second ultrasonic sensor (20, 30) suitably and/or to generate an error message and/or to deactivate at least one function in particular depending on the condition of at least one ultrasonic sensor (20, 30).

**9.** Vehicle assistance system comprising a device (10) according to at least one of Claims 6 to 11.

**Revendications**

**1.** Procédé pour adapter la sensibilité de capteurs à ultrasons (20, 30), avec lequel la sensibilité d'au moins un premier capteur à ultrasons (20, 30) est estimée à au moins un instant prédéfini pendant le fonctionnement en cours au moyen d'un premier paramètre (Q_ratio), **caractérisé en ce que** le premier paramètre (Q_ratio) est dépendant d'un facteur de qualité (Q0) valide au moment de la fabrication et d'un facteur de qualité (Q_akt) du premier capteur à ultrasons (20, 30) déterminé à l'instant prédéfini, et **en ce que** la sensibilité estimée du premier capteur à ultrasons (20, 30) est utilisée comme grandeur de commande pour adapter la sensibilité du premier capteur à ultrasons (20, 30) et/ou d'au moins un deuxième capteur à ultrasons (20, 30).

**2.** Procédé selon la revendication 1, **caractérisé en ce que** le facteur de qualité (Q0) valide au moment de la fabrication et/ou le facteur de qualité (Q_akt) valide à l'instant prédéfini et/ou le premier paramètre (Q_ratio) sont définis à partir des paramètres de substitution électriques (Ls, Rs, Cs, Cr) du capteur à ultrasons (20, 30) correspondant.

**3.** Procédé selon la revendication 1 ou 2, **caractérisé en ce qu'**un deuxième paramètre différent du premier paramètre (Q_ratio) est utilisé en vue de rendre la sensibilité estimée plausible.

**4.** Procédé selon l'une des revendications 1 à 3, **caractérisé en ce que** lorsque la sensibilité d'au moins un premier capteur à ultrasons (20, 30) diverge d'une valeur de seuil prédéfinie, la sensibilité du premier capteur à ultrasons (20, 30) et/ou d'au moins un deuxième capteur à ultrasons (20, 30) est adaptée de manière appropriée et/ou un message d'erreur est généré et/ou au moins une fonction dépendante notamment de l'état d'au moins un capteur à ultrasons (20, 30) est désactivée.

**5.** Dispositif (10) pour mettre en oeuvre un procédé selon l'une des revendications précédentes, **caractérisé par** un dispositif de commande (40) qui est configuré pour définir un premier paramètre (Q_ratio), qui est dépendant d'un facteur de qualité (Q0) valide au moment de la fabrication et d'un facteur de qualité (Q_akt) d'au moins un premier capteur à ultrasons (20, 30) déterminé à au moins un instant prédéfini, pour estimer la sensibilité du premier capteur à ultrasons (20, 30) à l'instant prédéfini à l'aide du premier paramètre (Q_ratio) et l'utiliser comme grandeur de commande pour adapter la sensibilité du premier capteur à ultrasons (20, 30) et/ou d'au moins un deuxième capteur à ultrasons (20, 30).

**6.** Dispositif (10) selon la revendication 5, **caractérisé en ce que** le dispositif de commande (40) est configuré pour définir le facteur de qualité (Q0) valide au moment de la fabrication et/ou le facteur de qualité (Q_akt) valide à l'instant prédéfini et/ou le premier paramètre (Q_ratio) à partir des paramètres de substitution électriques (Ls, Rs, Cs, Cr) du capteur à ultrasons (20, 30) correspondant.

7. Dispositif (10) selon l'une des revendications 5 ou 6, **caractérisé en ce que** le dispositif de commande (40) est configuré pour rendre la sensibilité estimée plausible au moyen d'au moins un deuxième paramètre différent du premier paramètre (Q_ratio).

8. Dispositif (10) selon l'une des revendications 5 à 7, **caractérisé en ce que** le dispositif de commande (40) est configuré pour, en présence d'une divergence de la sensibilité d'au moins un premier capteur à ultrasons (20, 30) d'une valeur de seuil prédéfinie, adapter de manière appropriée la sensibilité du premier capteur à ultrasons (20, 30) et/ou d'au moins un deuxième capteur à ultrasons (20, 30) et/ou générer un message d'erreur et/ou désactiver au moins une fonction qui dépend notamment de l'état d'au moins un capteur à ultrasons (20, 30).

9. Système d'assistance de véhicule comprenant un dispositif (10) selon au moins l'une des revendications 6 à 11.

Fig. 1

**IN DER BESCHREIBUNG AUFGEFÜHRTE DOKUMENTE**

**In der Beschreibung aufgeführte Patentdokumente**

- WO 2007051665 A1
- DE 102006053112 A1
- US 3789352 A
- WO 2004104623 A1